# EUROPÄISCHE PATENTANMELDUNG

(11) **EP 4 740 739 A2**
(43) Veröffentlichungstag der Anmeldung: **13.05.2026**
(21) Anmeldenummer: 26158583.0
(22) Anmeldetag: 01.04.2025
(51) Int. Cl.: A22B 3/02

(54) **VIEHBETÄUBUNGSVORRICHTUNG**

(30) Priorität: 30.04.2024 DE 202024102228 U
(62) Teilanmeldung aus: 25167732.4
(71) Anmelder: Turbocut Jopp GmbH, 97616 Bad Neustadt (DE)
(72) Erfinder: Büchs,, Dr. Hubert Peter, 97616 Bad Neustadt (DE); Schwitale, Roman, 97616 Bad Neustadt (DE); Kirchner, Daniel, 97616 Bad Neustadt (DE)
(74) Vertreter: Freischem & Partner Patentanwälte mbB

(57) **Zusammenfassung**

Die Erfindung betrifft eine Viehbetäubungsvorrichtung (44) mit einem Gehäuse (14) zur verfahrbaren Lagerung eines Schussbolzens (20), der aus einer Öffnung (46) des Gehäuses (14) ausstoßbar ist, einem Zwischenstück (12) mit einer Antriebseinheit zum Ausstoßen des Schussbolzens (20), einem verfahrbar gelagerten Schlagbolzen (22), welcher vor dem Auslösen der Antriebseinheit durch Spannen in eine Zündvorbereitungsstellung bringbar ist und mit einem Auslösehebel (24) zum Auslösen der Antriebseinheit. Zusätzlich ist folgendes Element vorgesehen:
a) ein an dem Zwischenstück (12) festgelegtes, aber axial verschieblich gelagertes Patronen-Auswerfelement (80), das zum zumindest teilweisen Herausbewegen einer Patrone (30) geeignet ist, die in ein in dem Zwischenstück (12) ausgebildetes Patronenlager (108) eingesetzt ist.

## Beschreibung

Die Erfindung betrifft eine Viehbetäubungsvorrichtung.

Aus DE 20 2022 102 648 U1 ist eine Viehbetäubungsvorrichtung bekannt mit einem Gehäuse zur verfahrbaren Lagerung eines Schussbolzens, der aus einer Öffnung des Gehäuses ausstoßbar ist, einer Antriebseinheit zum Ausstoßen des Schussbolzens und einem verfahrbar gelagerten Schlagbolzen, welcher zum Auslösen der Antriebseinheit durch Spannen in eine Zündvorbereitungsstellung bringbar ist. Dabei ragt der Schlagbolzen im gespannten Zustand zumindest mit einem äußeren Ende aus dem Gehäuse heraus. An dem äußeren Ende des Schlagbolzens ist mindestens ein elastisches Pufferelement angeordnet oder ausgebildet.

Ausgehend von dem Stand der Technik liegt der Erfindung die Aufgabe zugrunde, den Bedienkomfort und die damit verbundene Sicherheit einer Viehbetäubungsvorrichtung weiter zu verbessern.

Die Lösung der Aufgabe erfolgt erfindungsgemäß mit den Merkmalen des Anspruchs 1. Weitere praktische Ausführungen und Vorteile der Erfindung sind in Verbindung mit den abhängigen Ansprüchen beschrieben.

Eine erfindungsgemäße Viehbetäubungsvorrichtung weist folgende Elemente auf:
- ein Gehäuse zur verfahrbaren Lagerung eines Schussbolzens, der aus einer Öffnung des Gehäuses ausstoßbar ist,
- ein Zwischenstück mit einer Antriebseinheit zum Ausstoßen des Schussbolzens,
- einen verfahrbar gelagerten Schlagbolzen, welcher vor dem Auslösen der Antriebseinheit durch Spannen in eine Zündvorbereitungsstellung bringbar ist und
- einen Auslösehebel zum Auslösen der Antriebseinheit,
- wobei zusätzlich mindestens folgendes Element vorgesehen ist:
   a) ein an dem Zwischenstück festgelegtes, aber axial verschieblich gelagertes Patronen-Auswerfelement, das zum zumindest teilweisen Herausbewegen einer Patrone geeignet ist, die in ein in dem Zwischenstück ausgebildetes Patronenlager eingesetzt ist.

Optional kann auch ein mit dem Auslösehebel funktional zusammenwirkendes Sicherungselement vorgesehen sein, das zwischen mindestens einer Sperrstellung zum Sperren des Auslösehebels und mindestens einer Freigabestellung zum Entsperren des Auslösehebels bewegbar ist und/oder

Ein wie vorstehend genanntes Sicherungselement stellt in einer Sperrstellung sicher, dass der Auslösehebel gesperrt ist und verhindert so dauerhaft ein versehentliches Auslösen, insbesondere auch dann, wenn die Viehbetäubungsvorrichtung unsanft auf dem Boden abgelegt wird oder versehentlich so unglücklich herunterfällt, dass es durch Kontakt zum Boden oder zu anderen Gegenständen zu Krafteinwirkungen auf den Auslösehebel kommt.

Ein an dem Zwischenstück festgelegtes, aber axial verschieblich gelagertes Patronen-Auswerfelement gemäß Merkmal a), das zum zumindest teilweisen Herausbewegen einer Patrone geeignet ist, die in ein in dem Zwischenstück ausgebildetes Patronenlager eingesetzt ist, hat den Vorteil, dass der Nutzer keine weiteren Hilfsmittel benötigt, um eine - insbesondere benutzte - Patrone sicher und komfortabel aus dem Patronenlager zu lösen, um diese anschließend herauszunehmen und zu entsorgen.

Ein Patronen-Auswerfelement im Sinne der Erfindung ist vorzugsweise als Auswerfer ausgebildet. Weiter bevorzugt ist das Patronen-Auswerfelement formschlüssig gegenüber dem Zwischenstück festgelegt, so dass es verliersicher angeordnet ist.

Somit wird sowohl mit dem Sicherungselement als auch mit dem an dem Zwischenstück festgelegten Patronen-Auswerfelement gemäß Merkmal a) der Bedienkomfort und die damit verbundene Sicherheit einer Viehbetäubungsvorrichtung weiter verbessert. Bei beiden Elementen handelt es sich um relativbewegliche Elemente, die dem Risiko einer Fehlbedienung oder Verletzung einer Bedienperson entgegenwirken. Mit dem Sicherungselement wird das Risiko einer Fehlzündung deutlich gesenkt. Mit dem Patronen-Auswerfelement kann auf den Einsatz separater, spitzer Elemente, die in der Vergangenheit in der Praxis häufig für das Entfernen von gezündeten Patronen eingesetzt wurden, verzichtet werden.

Das Sicherungselement kann als Verriegelungsringelement ausgebildet sein, welches das Gehäuse zumindest teilweise umschließend angeordnet ist. In diesem Fall handelt es sich bei dem Sicherungselement um ein teilringförmiges oder vollständig ringförmiges Element. Ein solches Sicherungselement kann relativ einfach montiert und in Umfangsrichtung relativbeweglich gestaltet werden. Darüber hinaus lässt sich ein solches Sicherungselement derart anordnen, dass es den Auslösehebel umschließend angeordnet ist. In diesem Fall kann der Auslösehebel selbst jeweils als Anschlag für das Sicherungselement dienen. Oder es können zwei den Auslösehebel unmittelbar umgehende Elemente, insbesondere am Gehäuse ausgebildete Vorsprünge, jeweils als Anschlag für das Sicherungselement dienen. Vorzugsweise ist das teilring- oder ringförmig ausgebildete Sicherungselement drehbar an der Viehbetäubungsvorrichtung angeordnet, so dass es durch Drehen zwischen der Sperrstellung und der Freigabestellung einfach verstellbar ist. Weiter bevorzugt ist der Verriegelungsring durch mindestens eine Formabweichung (z.B. ein oder mehrere, radial nach innen hervorstehende(s) Widerstandselement(e)) so gestaltet, dass ein gewisses Mindest-Drehmoment erforderlich ist, um diesen zu drehen. Vorzugsweise ist er so ausgelegt, dass er in jeder Winkelstellung spielfrei stehen bleibt, wenn kein Drehmoment auf ihn ausgeübt wird. Der Verriegelungsring ist vorzugsweise aus Kunststoff oder Gummi hergestellt.

Bei einer Viehbetäubungsvorrichtung mit einem Sicherungselement kann das Sicherungselement mindestens eine Sperrfläche aufweisen, welche derart in eine Sperrstellung bewegbar ist, dass der Auslösehebel nicht betätigbar und/oder der Schlagbolzen nicht durch Spannen in eine Zündvorbereitungsstellung bringbar ist. Eine besonders hohe Sicherheit ergibt sich, wenn eine Sperrstellung sowohl für den Auslösehebel als auch für das Spannen des Schlagbolzens vorgesehen ist. Dies kann insbesondere derart realisiert sein, dass eine Stellung vorgesehen ist, in welcher beide Funktionen gesperrt sind. Alternativ oder in Ergänzung dazu kann es auch eine separate Stellung für jede der beiden Sperrfunktionen geben. Oder es ist eine Stellung zur Sperrung beider Funktionen ausgebildet und eine Stellung zur Sperrung nur einer der Funktionen. Wenn es zumindest zwei verschiedene Sperrstellungen geben soll, muss das Sicherungselement zwischen mindestens drei verschiedenen Stellungen verstellbar sein, einer Freigabestellung und zwei Sperrstellungen.

Bei einer Viehbetäubungsvorrichtung mit einem Sicherungselement kann das Sicherungselement in radialer Richtung des Gehäuses weiter herausragen als der Auslösehebel. Dies hat den Vorteil, dass das Sicherungselement beim Herunterfallen den Auslösehebel vor Deformation schützt, so dass sich Kräfte unmittelbar an dem Sicherungselement abstützen. Das Sicherungselement fungiert in diesem Fall auch als äußerer "Schutzmantel" für den Auslösehebel und verhindert ein Verbiegen oder sonstiges Beschädigen, wenn die Viehbetäubungsvorrichtung auf dem Boden abgelegt wird oder zu Boden stürzt.

Die Sicherheit einer Viehbetäubungsvorrichtung mit einem Sicherungselement wird weiter erhöht, wenn an dem Sicherungselement und/oder an dem funktional mit dem Sicherungselement verbundenen Gehäuseelement mindestens ein radial hervorragendes Widerstandselement derart ausgebildet ist, dass der Reibwiderstand bei Relativbewegung des Sicherungselements gegenüber dem Gehäuseelement erhöht ist. So kann ein unbeabsichtigtes Verdrehen des Sicherungselements, insbesondere bei Kraft- und/oder Drehmomenteinwirkung wie sie beim Anheben, Ablegen und Transportieren auch durch unachtsames Greifen oder Handhaben auftreten kann, sicher vermieden werden. Dies kann beispielsweise durch eine Übermaßfertigung oder durch das Einbringen mindestens eines zusätzlichen, die Reibung erhöhenden Elements bewirkt werden.

In einer praktischen Ausführungsform einer erfindungsgemäßen Viehbetäubungsvorrichtung mit einem Patronen-Auswerfelement ist das Patronen-Auswerfelement im Querschnitt u-förmig oder napfförmig ausgebildet. Ein derartig ausgebildetes Patronen-Auswerfelement hat den Vorteil, dass es ein nur geringes zusätzliches Bauteilgewicht aufweist und unter Verwendung der jeweiligen Schenkelabschnitte des "U" bzw. der Seitenwände des Napfes leicht auf einem anderen Element der Viehbetäubungsvorrichtung linear verschiebbar montierbar ist. Dies kann insbesondere durch Aufpressen erfolgen. Vorzugsweise ist in dem jeweiligen Bodenabschnitt des Patronen-Auswerfelements eine kreisförmige Öffnung ausgebildet, die derart auf die einzusetzenden Patronen abgestimmt ist, dass der radial nach außen hervorragende, endseitige Kragen einer Patrone von der Öffnung formschlüssig hintergriffen wird, wenn die Patronen in das Patronenlager eingesetzt werden. Dann kann durch das Verfahren des Patronen-Auswerfelements eine (benutzte oder unbenutzte) Patrone leicht wieder zumindest teilweise aus dem Patronenlager herausgezogen werden.

Wenn bei einer wie vorstehend beschriebenen Viehbetäubungsvorrichtung mit Patronen-Auswerfelement im Bereich eines Endes des Patronen-Auswerfelements mindestens ein radial nach innen hervorragender Anschlag ausgebildet ist und/oder an einer Außenfläche des Zwischenstücks der Viehbetäubungsvorrichtung ein radial nach außen hervorragender Anschlag ausgebildet ist, kann auf einfache Art und Weise verhindert werden, dass das Patronen-Auswerfelement versehentlich von der Viehbetäubungsvorrichtung entfernt wird. Es kann dann so ausgelegt sein, dass es nur bis zum Anschlag von dem Patronenlager wegbewegt werden kann, um die Patrone vollständig oder zumindest teilweise aus dem Patronenlager herauszuziehen.

In einer weiteren praktischen Ausführungsform einer erfindungsgemäßen Viehbetäubungsvorrichtung mit einem Patronen-Auswerfelement sind Patronen-Auswerfelement und an dem Zwischenstück miteinander korrespondierende Gewindeabschnitte derart ausgebildet, dass das Patronen-Auswerfelement auf das Zwischenelement aufschraubbar ist. Dies ist vorzugsweise derart realisiert, dass nach einem Aufschrauben ein axiales Verschieben ermöglicht ist, so dass das Aufschrauben nur für Montage- und Demontagezwecke verwendet wird. Im montierten (aufgeschraubten) Zustand dienen dann die Gewindeabschnitte als Anschlag für das axiale Verschieben in Entnahmerichtung der Patronen.

Als besonders vorteilhaft hat es sich erwiesen, wenn das Zwischenstück einer erfindungsgemäßen Viehbetäubungsvorrichtung über ein Gewinde mit einem auf das Zwischenstück aufschraubbaren Kopfstück verbunden ist, und das Gewinde mehrgängig und/oder als modifiziertes Trapezgewinde mit abgerundeten Flanken ausgebildet ist. Das Trapezgewinde ist dabei vorzugsweise durch eine reduzierte Gewindetiefe modifiziert. So kann einerseits eine tragfähige Drehverbindung hergestellt werden, wobei gleichzeitig nur wenige Umdrehungen erforderlich sind, bevorzugt nur 1-2 Umdrehungen und besonders bevorzugt nur eine einzige Umdrehung, um die Montage durchzuführen. Dies ermöglicht es Nutzern der Viehbetäubungsvorrichtung, das Zwischenstück und das Kopfstück mit wenig Montageaufwand zu demontieren und wieder zu montieren.

Vorzugsweise ist das Zwischenstück frei von Querdurchdringungen gestaltet, um eine hohe Berstfestigkeit zu erzielen.

Wenn bei einer Viehbetäubungsvorrichtung der Auslösehebel mindestens im Bereich des freien beweglichen Endes vollständig mit Kunststoff umspritzt ist, kann das Verletzungsrisiko besonders gering gehalten werden, da metallische Kanten vermieden werden.

In einer anderen praktischen Ausführungsform ist das Gehäuse zumindest teilweise in einem den Schussbolzen umschließenden Bereich von einer zusätzlichen Mantelhülse derart umschlossen, dass mindestens ein zusätzlicher Gasausstoßpfad gebildet ist. Ein solcher Gasausstoßpfad ist insbesondere in Verbindung mit einer Viehbetäubungsvorrichtung vorteilhaft, die anstelle einer Feder als Rückholelement hülsenartige, elastisch verformbare Pufferelemente aufweist, die beim Ausfahren des Schussbolzens komprimiert werden und sich dann wieder elastisch zurückverformen, wodurch der Schussbolzen wieder in die in das Gehäuse eingetauchte Stellung zurückverfahren wird. Bei einer solchen Ausführungsform fehlt es an einem ausreichend großen Gasausstoßpfad, der zu einem großen Überdruck im Gehäuse führen würde, wenn kein zusätzlicher Gasausstoßpfad vorgesehen ist. Mit der beschriebenen Mantelhülse und geeigneten Übergangsschlitzen kann ein solcher zusätzlicher Gasausstoßpfad auf relativ einfache Art und Weise ausgebildet und für eine zuverlässige Funktionalität bereitgestellt werden. Insoweit erhöht auch ein solcher zusätzlicher Gasausstoßpfad die Sicherheit einer erfindungsgemäßen Viehbetäubungsvorrichtung.

In einer weiteren praktischen Ausführungsform einer erfindungsgemäßen Viehbetäubungsvorrichtung ist zusätzlich zu dem Zwischenstück ein alternatives Zwischenstück vorgesehen, das alternativ montierbar ist. Dabei ist in einem der Zwischenstücke ein zentral angeordnetes Patronenlager für eine Zentralfeuerpatrone und in dem anderen Zwischenstück ein dezentral angeordnetes Patronenlager für eine Randzünderpatrone vorgesehen. Dies ermöglicht es, eine einzige Viehbetäubungsvorrichtung durch Auswahl des jeweils geeigneten Zwischenstücks sowohl mit Zentralfeuerpatronen (Zentralfeuerkartuschen) als auch mit Randzünderpatronen (Randfeuerkartuschen) zu verwenden.

Wenn das Patronen-Auswerfelement und/oder das Zwischenstück derart ausgebildet sind, dass das Patronen-Auswerfelement zumindest während der axialen Verschiebung verdrehgesichert ist, kann insbesondere in Verbindung mit der Verwendung der vorstehend genannten Randzünderpatronen sichergestellt werden, dass sich das Patronen-Auswerfelement nicht in einer ungewünschte Relativposition derart verdreht, dass das Einsetzen einer Patrone erschwert oder unmöglich ist oder ohne Durchdringung der in dem Patronen-Auswerfelement ausgebildeten Öffnung erfolgt. Mit anderen Worten ausgedrückt, stellt eine solche Verdrehsicherung sicher, dass die in dem Patronen-Auswerfelement ausgebildete Öffnung und das Patronenlager, insbesondere die das Patronenlager oberseitig begrenzende Öffnung, miteinander fluchten.

In einer praktischen Ausführungsform mit Verdrehsicherung sind an dem Patronen-Auswerfelement und an dem Zwischenstück mindestens ein radial hervorragender Vorsprung und eine korrespondierende Vertiefung ausgebildet. Dies ist so zu verstehen, dass an einem der Elemente mindestens ein Vorsprung ausgebildet ist und an dem anderen der Elemente mindestens eine mit dem Vorsprung korrespondierende Vertiefung ausgebildet ist.

Es ist weiter bevorzugt, wenn das Patronen-Auswerfelement und das Zwischenstück einer erfindungsgemäßen Viehbetäubungsvorrichtung aus dem gleichen Werkstoff hergestellt sind. Diesbezüglich wird insbesondere auf die Herstellung dieser Elemente aus Vergütungsstahl verwiesen. Mit Vergütungsstählen kann eine hohe Berstfestigkeit erzeugt werden, wobei die Ausbildung von Patronen-Auswerfelement und Zwischenstück aus dem gleichen Werkstoff den weiteren Vorteil hat, dass der jeweilige Temperaturausdehnungskoeffizient gleich groß ist, so dass auch bei größeren Temperaturschwankungen eine relativ konstante (niedrige) Reibung zwischen den Elementen erhalten bleibt, da die jeweilige Ausdehnung bzw. Kontraktion der Elemente in dem jeweiligen Kontaktbereich gleich groß ist.

Weitere praktische Ausführungsformen und Vorteile der Erfindung sind nachfolgend im Zusammenhang mit den Zeichnungen beschrieben. Es zeigen:
- Fig. 1: eine Längsschnittdarstellung einer erfindungsgemäßen Viehbetäubungsvorrichtung,
- Fig. 2: eine isometrische Darstellung der Viehbetäubungsvorrichtung aus Figur 1 mit Sicherungselement in einer Sperrstellung,
- Fig. 3: eine isometrische Darstellung der Viehbetäubungsvorrichtung aus den Figuren 1 und 2 mit Sicherungselement in einer Freigabestellung,
- Fig. 4: eine isometrische Darstellung nur des Sicherungselements und des innenseitig des Sicherungselements angeordneten Zwischenstücks 12 mit Patronen-Auswerfelement aus den Figuren 1 bis 3,
- Fig. 5: eine Längsschnittdarstellung durch die in Figur 4 dargestellten Elemente,
- Fig. 6: eine Längsschnittdarstellung nur durch das Patronen-Auswerfelement aus den Figuren 1 bis 5,
- Fig. 7a: eine vergrößerte Darstellung des in Fig. 5 mit VII gekennzeichneten Teilbereichs mit einer in den Hohlraum eingesetzten Patrone und eingefahrenem Patronen-Auswerfelement,
- Fig. 7b: den gleichen Teilbereich wie in Figur 7b mit in Richtung des Pfeils B herausgezogenem Patronen-Auswerfelement,
- Fig. 8: eine Längsschnittdarstellung eines Teilausschnitts einer anderen Ausführungsform einer Viehbetäubungsvorrichtung, die als Rückholelemente für den Schussbolzen 20 diesen umgebende, elastisch verformbare Hülsenelemente aufweist,
- Fig. 9a: ein Zwischenstück mit Patronen-Auswerfelement einer anderen Ausführungsform mit eingefahrenem Patronen-Auswerfelement in einer Längsschnittdarstellung,
- Fig 9b: das Zwischenstück aus Fig. 9a mit ausgefahrenem Patronen-Auswerfelement in einer Längsschnittdarstellung,
- Fig. 10a: das mit X gekennzeichnete Detail aus Fig. 9a in einer vergrößerten Darstellung,
- Fig. 10b: das mit Y gekennzeichnete Detail aus Fig. 9b in einer vergrößerten Darstellung,
- Fig. 11: eine Horizontalschnittdarstellung durch das Auswerfelement gemäß der Linie XI-XI in Figur 9a sowie
- Fig. 12: eine isometrische Darstellung des in den Figuren 9a bis 11 dargestellten Zwischenstücks mit Patronen-Auswerfelement mit teilweise ausgeschnittenem Patronen-Auswerfelement zur Sichtbarmachung eines am Patronen-Auswerfelement ausgebildeten Vorsprungs in einer in dem Zwischenstück ausgebildeten Vertiefung.

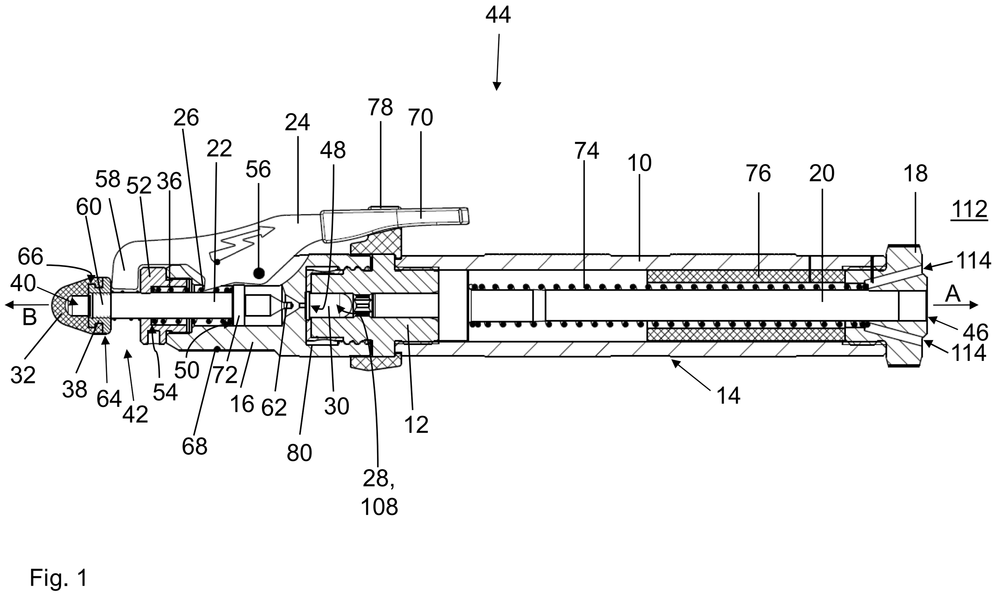

Figur 1 zeigt eine erfindungsgemäße Viehbetäubungsvorrichtung 44. Die Viehbetäubungsvorrichtung 44 umfasst ein mehrteiliges Gehäuse 14, das im Wesentlichen gebildet ist durch eine Führungshülse 10, ein mit der Führungshülse 10 fest verbundenes Zwischenstück 12 und ein fest mit dem Zwischenstück verbundenes Kopfstück 16. In der gezeigten Ausführungsform sind die Führungshülse 10, das Zwischenstück 12 und das Kopfstück 16 jeweils miteinander verschraubt.

Die Führungshülse 10 dient zur Aufnahme und Führung eines Schussbolzens 20, welcher in Figur 1 in der eingefahrenen Stellung gezeigt ist. Der Schussbolzen 20 ist in Richtung des Pfeils A aus einer Öffnung 46 des Gehäuses 14 ausstoßbar. In der gezeigten Ausführungsform ist im Bereich der Öffnung 46 ein separates Verschlussstück 18 fest mit der Führungshülse 10 verbunden, hier mittels einer Schraubverbindung.

Das Zwischenstück 12 ist so ausgebildet, dass es einen Abschnitt zur Lagerung des Schussbolzens 20 aufweist. Ferner ist ein als Patronenlager 108 dienender Hohlraum 28 zum Einsetzen einer Patrone 30 vorgesehen.

Mit dem Kopfstück 16 wird der Hohlraum 28 rückseitig weitestgehend verschlossen, wobei eine Schlagbolzenöffnung 48 vorgesehen ist, die einen direkten Kontakt zwischen einem in dem Kopfstück 16 gelagerten Schlagbolzen 22 und der Patrone 30 ermöglicht, wenn der Schlagbolzen 22 ausgelöst wurde. An dem Schlagbolzen 22 ist eine radial hervorragende Abstützfläche 50 zur Abstützung einer den Schlagbolzen 22 umschließenden Schlagbolzenfeder 36 ausgebildet, indem ein radialer Vorsprung 72 an dem Schlagbolzen 22 ausgebildet ist. Die Schlagbolzenfeder 36 erstreckt sich bis zu einem Widerlagerelement 52, welches mit dem außenseitigen Ende des Kopfstücks 16 verschraubt ist. An dem Widerlagerelement 52 ist eine weitere Abstützfläche 54 für die Schlagbolzenfeder 36 vorgesehen.

An dem Kopfstück 16 ist mittels eines Achsbolzens 56 ein Auslösehebel 24 mit einem Griffabschnitt 70 verschwenkbar befestigt. Dabei ist der außenseitige Teil des Auslösehebels 24 mittels einer Ringfeder 68 radial nach innen vorgespannt, so dass der auf der anderen Seite des Achsbolzens 56 angeordnete, innenseitige Griffabschnitt 70 des Auslösehebels 24 im ansonsten unbelasteten Zustand nach außen gedrückt wird. Eine Bewegung des Griffabschnitts 70 radial nach innen erfolgt dementsprechend stets gegen die radial nach innen wirkende Kraft der Ringfeder 68. Innenseitig des Auslösehebels 24 sind eine Rastnase 26 und eine Sperrkontur 58 ausgebildet.

An dem äußeren Ende 60 des Schlagbolzens 22 ist ein Kragenelement 38 fest mit dem Außenumfang des Schlagbolzens 22 verbunden. Das Kragenelement 38 weist in der gezeigten Ausführungsform einen ersten Kragen 64 und einen zweiten Kragen 66 auf. Ferner ist an dem Kragenelement 38 ein Pufferelement 32 befestigt. Dabei ist das Pufferelement 32 in der gezeigten Ausführungsform angespritzt. Das Pufferelement 32 kann alternativ auch aufgepresst sein. Da der zweite Kragen 66 in radialer Richtung weniger auskragt als der erste Kragen 64, kann dieser als Hinterschnitt für die Befestigung des Pufferelements 32 nach dem Aufpressen genutzt werden. In dem Pufferelement 32 ist ein Hohlraum 40 ausgebildet.

In der in Figur 1 gezeigten, entspannten Stellung befindet sich die an dem Auslösehebel 24 ausgebildete Sperrkontur 58 zwischen dem Widerlagerelement 52 und dem ersten Kragenelement 64 des Kragenelements 38.

Zum Spannen des Schlagbolzens 22 muss dieser in Richtung des Pfeils B aus dem Gehäuse 14 herausgezogen werden. Dazu muss der Griffabschnitt nach innen gedrückt werden, um die Sperrkontur 58 radial nach außen zu bewegen. Beim Spannen des Schlagbolzens 22 wird - aufgrund eines Zusammenwirkens der zur Rastnase 26 führenden, schrägen Kontur - der Griffabschnitt 70 des Auslösehebels 24 zunehmend nach innen gezogen und die Schlagbolzenfeder 36 in eine zunehmend gestauchte, vorgespannte Position verfahren. In der vollständig vorgespannten Stellung wird die Schlagbolzenfeder 36 dadurch in Position gehalten, dass die Rastnase 26 den radialen Vorsprung 72 hintergreift. In dem Moment des Hintergreifens bewegt sich der Auslösehebel 24 zurück nach außen. In dieser vollständig gespannten Stellung, die in Figur 1 nicht gezeigt ist, ist das Pufferelement 32 mit dem Schlagbolzen 22 nach links in Richtung des Pfeils B aus dem Gehäuse 14 heraus verfahren. Die Anordnung aus Pufferelement 32, Schlagbolzen 22, Schlagbolzenfeder 36 und Widerlagerelement 52 kann insoweit als Spanneinrichtung 42 bezeichnet werden.

Wird der Auslösehebel 24 dann im gespannten Zustand betätigt, indem der Griffabschnitt 70 von außen radial nach innen gedrückt und um den Achsbolzen 56 verschwenkt wird, wird der Schlagbolzen 22, angetrieben von der Schlagbolzenfeder 36, in Richtung des Pfeils A bewegt und damit in Richtung Hohlraum 28 beschleunigt, um die Patrone 30 mit der Vorderseite 62 (hier als Spitze ausgebildet) zu treffen und die in der zentral angeordneten Patrone 30 befindliche Treibladung auszulösen (Zentralfeuer). Durch das Auslösen der Patrone 30 wird der Schussbolzen 20, pyrotechnisch durch die ausgelöste Treibladung angetrieben, in bekannter Art und Weise durch die Öffnung 46 aus dem Gehäuse ausgestoßen. Im vorliegenden Fall ist insoweit eine pyrotechnische Antriebseinheit für den Schussbolzen 20 vorgesehen.

In der in den Figuren 1 bis 3 gezeigten Ausführungsform ist der Griffabschnitt 70 mit Kunststoff umspritzt. Ferner ist die Außenkontur des Griffabschnitts 70 ausschließlich stumpfkantig gestaltet, so dass sich eine angenehme Haptik ergibt und das Verletzungsrisiko gering gehalten wird.

Wie in Figur 1 gut erkennbar ist, befindet sich in der Führungshülse 10 auch eine Schussbolzenfeder 74, welche mit dem Schussbolzen 20 zusammenwirkt. Diese dient dazu, den Schussbolzen 20 nach dem Austritt aus der Öffnung 46 wieder zurück in das Gehäuse 14 zu verfahren (Rückholfunktion). Zwischen der Schussbolzenfeder 74 und dem ausgangsseitigen Ende der Führungshülse 10 ist ein Gummipuffer 76 angeordnet. Gase, die von der Patrone 30 ausgestoßen werden, können bei der in Figur 1 gezeigten Ausführungsform entlang der Schussbolzenfeder 74 zwischen Schussbolzen 20 und Gummipuffer 76 entlang und anschließend über in dem Verschlussstück 18 ausgebildete Austrittskanäle 114 in die Umgebung 112 strömen. Dieser Strömungspfad dient auch für einen Druckausgleich, der bei jedem Verfahren des Schussbolzens 20 erforderlich ist.

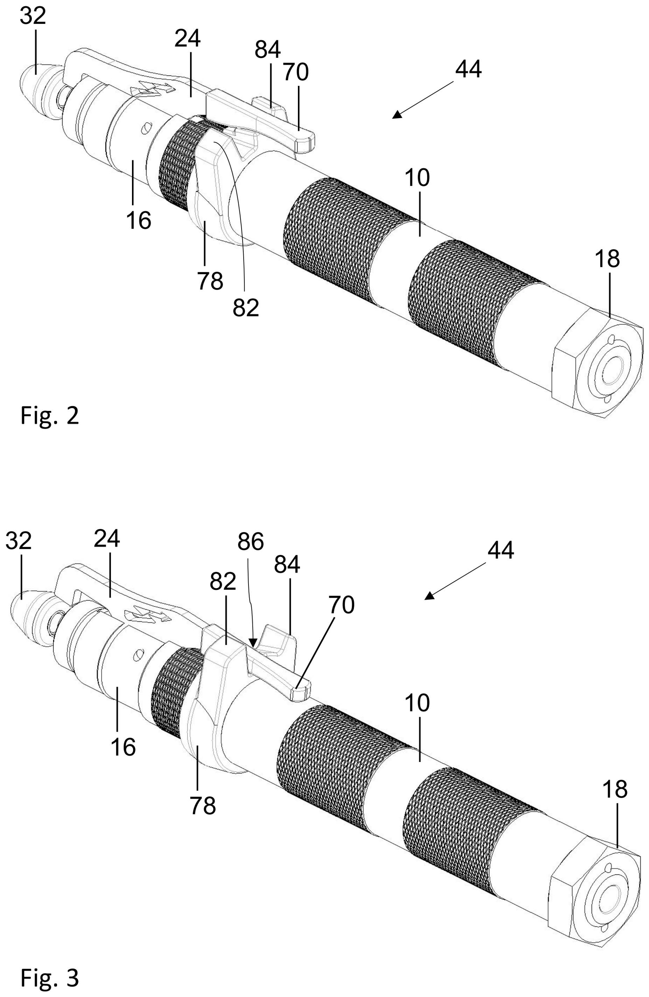

In Figur 1 sind auch ein Sicherungselement 78 und ein Patronen-Auswerfelement 80 erkennbar, die in Verbindung mit den Figuren 2 bis 7 nachfolgend im Detail beschrieben werden.

Das Sicherungselement 78 ist ein ringförmig ausgebildetes Element, das außenseitig des Zwischenstücks 12 angeordnet ist. Es ragt mit zwei Vorsprüngen 82, 84 in radialer Richtung des Gehäuses 14 weiter heraus als der Betätigungsabschnitt 70 des Auslösehebels 24. Die Vorsprünge 82, 84 dienen jeweils als Anschlag für die Drehbewegung des Sicherungselements 78. Durch Drehen des Sicherungselements 78 kann dieses in der gezeigten Ausführungsform zwischen der in Figur 2 gezeigten Sicherungsstellung und der in Figur 3 gezeigten Freigabestellung verfahren werden.

In der Sicherungsstellung schließt radial innenseitig des Betätigungsabschnitts 70 eine Sperrfläche 86 an, mit der verhindert wird, dass der Betätigungsabschnitt 70 radial nach innen gedrückt werden kann. Damit ist zum einen ein manuelles Auslösen blockiert, sofern sich der Schlagbolzen 22 bereits in einer vorgespannten Position befindet. Zum anderen wird durch die Sperrfläche 86 auch ein Vorspannen verhindert, weil sich der Betätigungsabschnitt 70 zum Vorspannen aufgrund der - wie vorstehend beschrieben - zur Rastnase 26 führenden, schrägen Kontur ebenfalls nach innen bewegen können müsste.

Die in den Figuren 1 bis 3 gezeigte Viehbetäubungsvorrichtung 44 ist so ausgelegt, dass beim rollenden Bewegen auf einer Oberfläche das Sicherungselement 78 in der gewählten Stellung verbleibt und der Auslösehebel 24 keinen Kontakt zur Oberfläche hat.

Um den Schlagbolzen 22 vorzuspannen oder um den vorgespannten Schlagbolzen 22 auszulösen, muss das Sicherungselement 78 in die in Figur 3 gezeigte Freigabestellung verdreht werden.

Zum Befüllen des in dem Zwischenstück 12 ausgebildeten Hohlraums 28 mit einer Patrone 30 (vgl. Fig. 1), wird das Kopfstück 16 abgeschraubt.

Dadurch wird die in dem Patronen-Auswerfelement 80 ausgebildete Öffnung 88 zugänglich. Beim Einsetzen einer Patrone 30 stützt sich ein oberer Kragen der Patrone 30 an einer an dem Patronen-Auswerfelement 80 ausgebildeten Absatzfläche 90 ab. Soll die Patrone 30 - insbesondere nach dem Gebrauch - wieder aus dem Hohlraum 28 entfernt werden, muss dazu lediglich das Patronen-Auswerfelement 80 in Richtung des Pfeils B relativ gegenüber dem Zwischenstück 12 verschoben werden. Zum besseren Angreifen und einem erleichterten Ziehen an dem Patronen-Auswerfelement 80 ist außenseitig des Patronen-Auswerfelements 80 eine nach innen gekrümmte Greifkontur 92 ausgebildet. Eine solche Greifkontur 92 kann alternativ auch ohne Rundungen als Vertiefung mit im Querschnitt eckiger Kontur oder als radial nach außen hervorragendes Element ausgebildet sein, sofern dies der Bauraum in dem Zwischenstück 12 erlaubt.

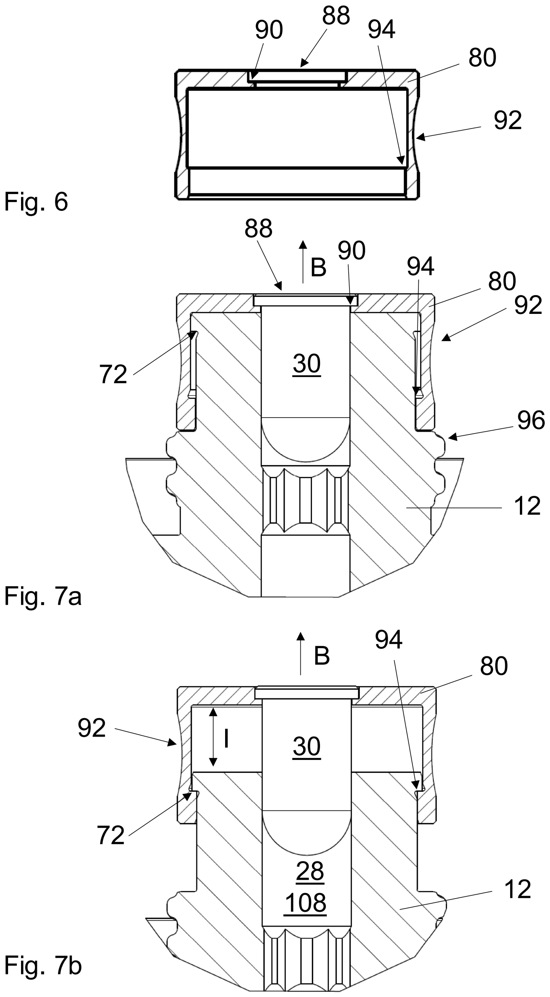

Das Patronen-Auswerfelement 80 lässt sich in der gezeigten Ausführungsform um die Länge l gegenüber dem Zwischenstück 12 herausziehen. Dies ist in den Figuren 7a und 7b gut zu erkennen, wobei Figur 7a das Patronen-Auswerfelement 80 im eingefahrenen Zustand zeigt und Figur 7b im herausgezogenen Zustand. In Figur 7b ist die Länge I sichtbar und eingetragen. Im herausgezogenen Zustand kommt es zum Anschlagen eines Absatzes 94 mit einem an dem Zwischenstück 12 ausgebildeten, radial hervorragenden Vorsprung 72. Wird das Patronen-Auswerfelement 80 anschließend entgegen des Pfeils B wieder zurück in Richtung Hohlraum 28 gedrückt, verbleibt die Patrone 30 an ihrem Ort und ragt aufgrund der resultierenden Relativbewegung zwischen dem Patronen-Auswerfelement 80 und der Patrone 30 anschließend aus dem Patronen-Auswerfelement 80 heraus. Die Patrone 30 kann anschließend leicht mit der Hand oder einem Greifwerkzeug (z.B. einer Zange) gegriffen werden, um sie zu entsorgen. Das Patronen-Auswerfelement 80 ist dementsprechend als Auswerfer ausgebildet und formschlüssig gegenüber dem Zwischenstück 12 festgelegt.

In der gezeigten Ausführungsform ist das Patronen-Auswerfelement 80 napfförmig ausgebildet. Es weist eine zylindrische Grundform auf und ist im Querschnitt u-förmig ausgebildet.

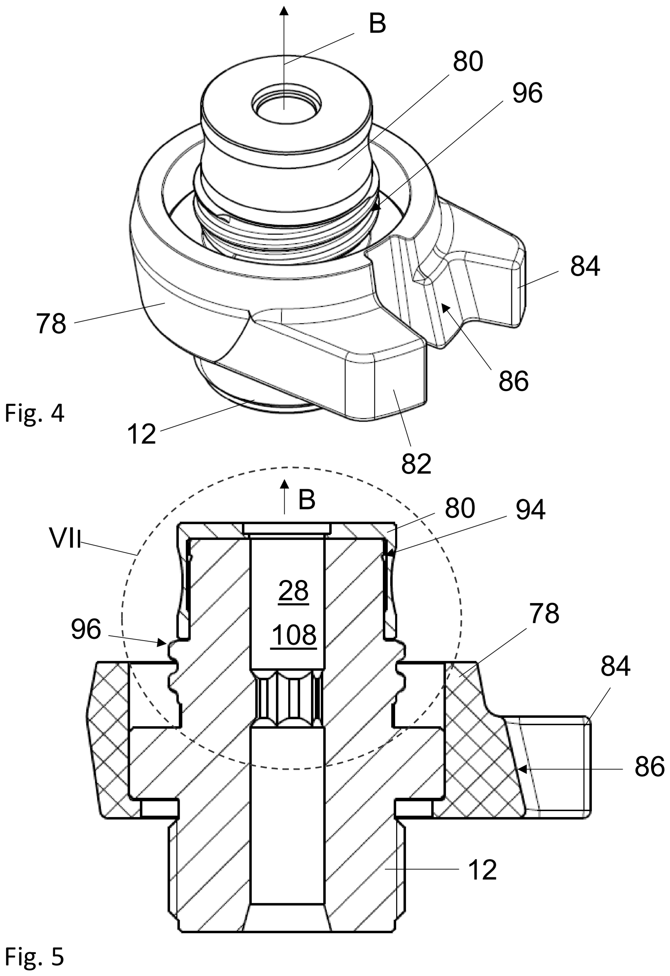

Wie aus den Figuren 4 und 5 ersichtlich ist, ist an dem Zwischenstück 12 ein modifiziertes Trapezgewinde 96 ausgebildet. Es weist im Querschnitt die Grundform eines Trapezes auf, ist jedoch durch relativ große Übergangsradien modifiziert, insbesondere Radien von mehr als 1 mm, bevorzugt mehr als 3 mm und besonders bevorzugt mehr als 5 mm. Eine weitere Modifikation besteht in einer reduzierten Gewindetiefe, wodurch das Zwischenstück 12 insgesamt eine erhöhte Berstsicherheit und eine erhöhte Anwendungssicherheit aufweist. Die großen Übergangsradien reduzieren das Verletzungsrisiko bei Anfassen des modifizierten Trapezgewindes 96 und reduzieren die bei der Benutzung auftretenden Kerbspannungen. Es handelt sich um ein mehrgängiges Gewinde.

Wie aus Figur 1 gut ersichtlich ist, ist das Patronen-Auswerfelement 80 bei aufgeschraubtem Kopfstück 16 geschützt zwischen dem Zwischenstück 12 und dem Kopfstück 16 angeordnet, so dass auch bei hoher Druckeinwirkung im Zündmoment keine Beschädigung zu erwarten ist.

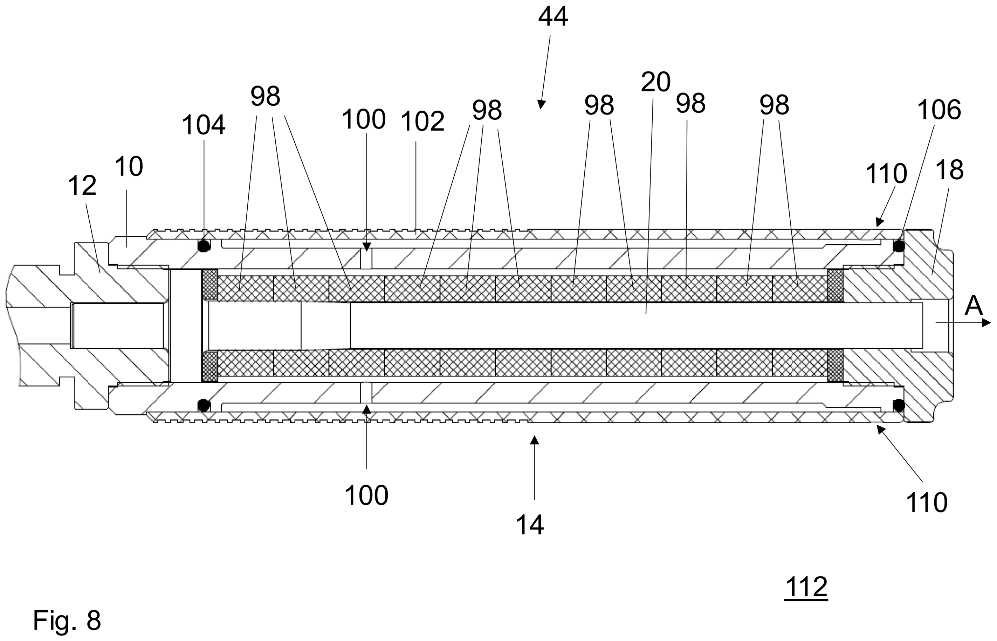

Figur 8 zeigt eine ausschnittsweise Darstellung einer weiteren Ausführungsform einer Viehbetäubungsvorrichtung 44 im Bereich des Schussbolzens 20. Für identische oder zumindest funktionsgleiche Elemente wie bei der zuvor beschriebenen Ausführungsform werden für die Beschreibung der folgenden und weitere Ausführungsformen die gleichen Bezugszeichen verwendet wie vorstehend.

Bei der in Figur 8 gezeigten Ausführungsform ist der Schussbolzen 20 nahezu über seine gesamte Länge von einer Vielzahl von hülsenartigen, elastisch verformbaren Pufferelementen 98 umschlossen. Diese sind aus einem zelligen Material hergestellt, das beim Ausfahren des Schussbolzens 20 in Richtung des Pfeils A komprimiert wird und sich anschließend wieder zurückverformt, wodurch der Schussbolzen 20 wieder in das Gehäuse 14 hinein verfahren wird. Als Gasausstoßpfad und Druckausgleichspfad sind bei dieser Ausführungsform zwei (oder mehr) radiale Öffnungen 100 in der Führungshülse vorgesehen. Die Führungshülse 10 ist von einer Mantelhülse 102 umschlossen. Die beiden Elemente sind mittels Dichtelementen 104, 106 jeweils in axialer Richtung gegeneinander abgedichtet. In der Mantelhülse 102 sind schräg nach außen führende Öffnungen 110 ausgebildet, welche einen Gasaustausch mit der Umgebung (Atmosphäre) 112 ermöglichen.

In der gezeigten Ausführungsform ist die Mantelhülse 102 auf an der Führungshülse 10 ausgebildeten Umfangsflächen gelagert und durch Aufschrauben des Verschlussstücks 18 axial fixiert. Alternativ können auch Umfangsflächen an dem Zwischenstück 12 und/oder an dem Verschlussstück 18 ausgebildet sein, um die Mantelhülse 102 zu lagern. Auch die Dichtelemente 104, 106 können alternativ anders angeordnet sein, um eine funktional gleichwertige Abdichtung zu schaffen.

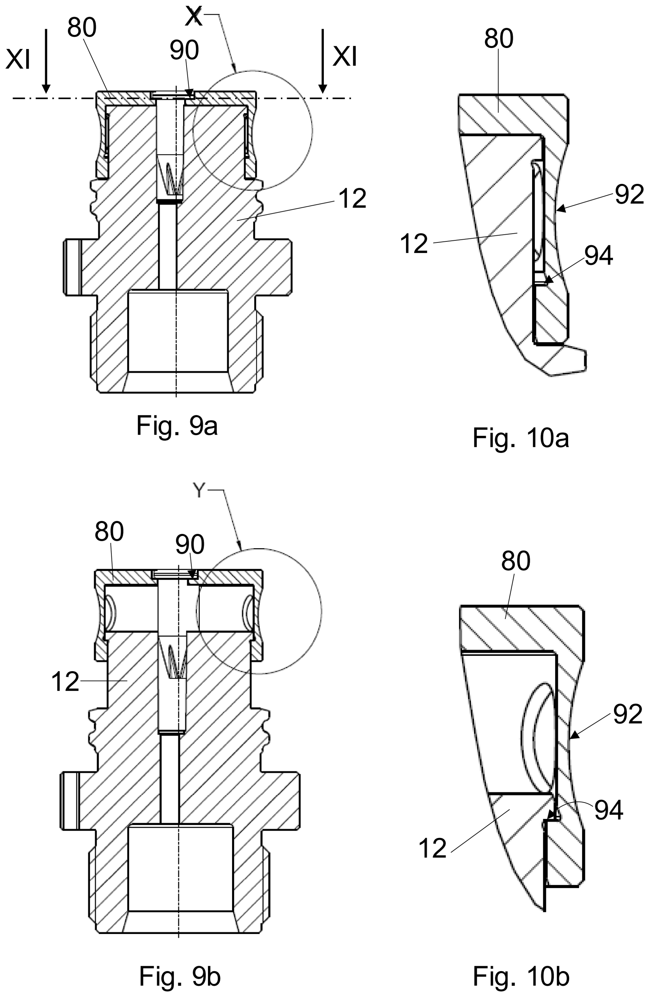

In den Figuren 9a bis 12 ist eine weitere Ausführungsform eines Zwischenstücks 12 mit Patronen-Auswerfelement 80 gezeigt. Dabei zeigen die Figu-ren 9a und 10a das Patronen-Auswerfelement 80 in einer eingefahrenen Stellung, während die Figuren 9b, 10b und 12 das Patronen-Auswerfelement 80 in einer ausgefahrenen Stellung zeigen.

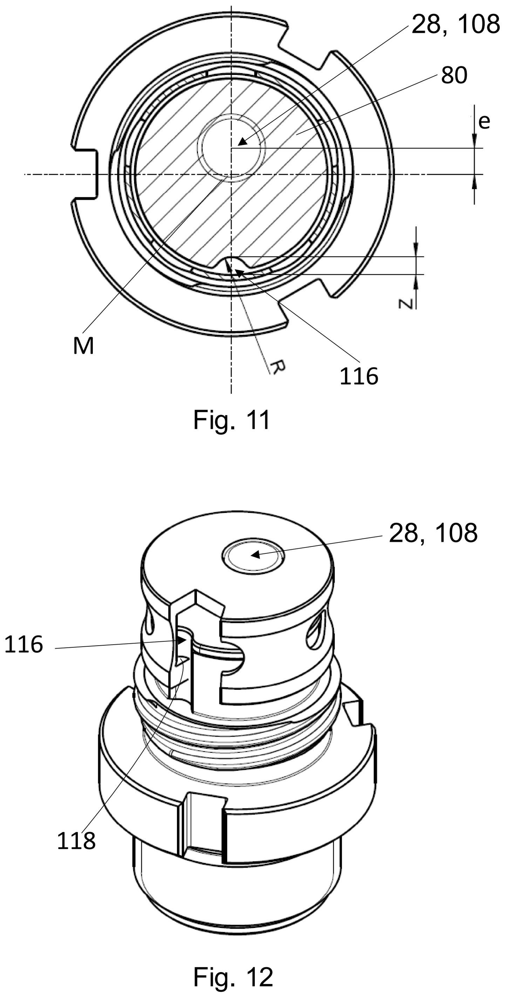

Wie aus den Figuren 11 und 12 gut ersichtlich ist, ist der als Patronenlager 108 dienende Hohlraum 28 um die Exzentrizität e gegenüber der Mittelachse M des Zwischenstücks 12 versetzt angeordnet. Dies wiederum führt dazu, dass einer Relativ-Verdrehung zwischen dem Patronen-Auswerfelement 80 und dem Zwischenstück 12 entgegengewirkt werden muss, weil sonst die in dem Patronen-Auswerfelement 80 ausgebildete Öffnung 88 und die in dem Zwischenstück 12 ausgebildete Öffnung zu dem Hohlraum 28 nicht mehr miteinander fluchten. Um diese Verdrehsicherung zu bewirken, ist in der gezeigten Ausführungsform in dem Zwischenstück 12 eine Vertiefung 116 ausgebildet. Diese ist in der gezeigten Ausführungsform als außenseitige Axialnut mit Radius R derart ausgebildet, dass sich die Vertiefung um den Betrag Z in radialer Richtung nach innen erstreckt (vgl. Figur 11).

Korrespondierend zu dieser Vertiefung 116 ist an dem Patronen-Auswerfelement 80 ein Vorsprung 118 ausgebildet, der radial von außen in die Axialnut hineinragt und während des Aus- und Einfahrens in der Axialnut geführt wird.

In der in Figur 12 gezeigten Darstellung ist der Vorsprung 118 halb ausgeschnitten dargestellt. Er erstreckt sich tatsächlich über die gesamte Vertiefung 116 und füllt die Axialnut so aus, dass der Vorsprung 118 nahezu spielfrei und reibungsarm in axialer Richtung der Axialnut gleiten kann.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

Insbesondere wird auf die in den Figuren nicht dargestellte, aber beanspruchte Möglichkeit verwiesen, einen als Patronenlager 108 dienenden Hohlraum 28 in einem alternativen Zwischenstück 12 exzentrisch derart anzuordnen, dass die in den Figuren 1-8 gezeigte Viehbetäubungsvorrichtung 44 mit dem zentral angeordneten Schlagbolzen 22 zur Auslösung einer Randzünderpatrone (Randzünderkartusche) genutzt werden kann.

### Bezugszeichenliste

- 10: Führungshülse
- 12: Zwischenstück
- 14: Gehäuse
- 16: Kopfstück
- 18: Verschlussstück
- 20: Schussbolzen
- 22: Schlagbolzen
- 24: Auslösehebel
- 26: Rastnase
- 28: Hohlraum
- 30: Patrone
- 32: Pufferelement
- 34: Ringfeder
- 36: Schlagbolzenfeder
- 38: Kragenelement
- 40: Hohlraum
- 42: Spanneinrichtung
- 44: Viehbetäubungsvorrichtung
- 46: Öffnung
- 48: Schlagbolzenöffnung
- 50: Abstützfläche
- 52: Widerlagerelement
- 54: Abstützfläche
- 56: Achsbolzen
- 58: Sperrkontur
- 60: äußeres Ende (des Schlagbolzens)
- 62: Vorderseite (des Schlagbolzens)
- 64: erster Kragen
- 66: zweiter Kragen
- 68: Ringfeder
- 70: Betätigungsabschnitt/Griffabschnitt
- 72: radialer Vorsprung
- 74: Schussbolzenfeder
- 76: Gummipuffer
- 78: Sicherungselement
- 80: Patronen-Auswerfelement
- 82: Vorsprung
- 84: Vorsprung
- 86: Sperrfläche
- 88: Öffnung
- 90: Absatzfläche
- 92: Greifkontur
- 94: Absatz
- 96: modifiziertes Trapezgewinde
- 98: Pufferelement
- 100: radiale Öffnung
- 102: Mantelhülse
- 104: Dichtelement
- 106: Dichtelement
- 108: Patronenlager
- 110: Öffnung
- 112: Umgebung
- 114: Austrittskanal
- 116: Vertiefung
- 118: Vorsprung

- A: Pfeil
- B: Pfeil
- e: Exzentrizität
- I: Länge
- M: Mittelachse
- R: Radius
- X: Detail
- XI: Detail
- Y: Detail
- Z: Betrag (radiale Erstreckung der Vertiefung)

## Patentansprüche

1. Viehbetäubungsvorrichtung (44) mit einem Gehäuse (14) zur verfahrbaren Lagerung eines Schussbolzens (20), der aus einer Öffnung (46) des Gehäuses (14) ausstoßbar ist, einem Zwischenstück (12) mit einer Antriebseinheit zum Ausstoßen des Schussbolzens (20), einem verfahrbar gelagerten Schlagbolzen (22), welcher vor dem Auslösen der Antriebseinheit durch Spannen in eine Zündvorbereitungsstellung bringbar ist und mit einem Auslösehebel (24) zum Auslösen der Antriebseinheit,
**dadurch gekennzeichnet,**
**dass** zusätzlich mindestens eines der folgenden Elemente vorgesehen ist:
a) ein an dem Zwischenstück (12) festgelegtes, aber axial verschieblich gelagertes Patronen-Auswerfelement (80), das zum zumindest teilweisen Herausbewegen einer Patrone (30) geeignet ist, die in ein in dem Zwischenstück (12) ausgebildetes Patronenlager (108) eingesetzt ist.

2. Viehbetäubungsvorrichtung (44) nach dem vorstehenden, **dadurch gekennzeichnet, dass** das Patronen-Auswerfelement (80) im Querschnitt u-förmig oder napfförmig ausgebildet ist.

3. Viehbetäubungsvorrichtung (44) nach dem vorstehenden Anspruch, **dadurch gekennzeichnet, dass** im Bereich eines Endes des Patronen-Auswerfelements (80) mindestens ein radial nach innen hervorragender Anschlag ausgebildet ist und/oder an einer Außenfläche des Zwischenstücks (12) ein radial nach außen hervorragender Anschlag ausgebildet ist.

4. Viehbetäubungsvorrichtung (44) nach einem der vorstehenden Ansprüche, **dadurch gekennzeichnet, dass** an dem Patronen-Auswerfelement (80) und an dem Zwischenstück (12) miteinander korrespondierende Gewindeabschnitte derart ausgebildet sind, dass das Patronen-Auswerfelement (80) auf das Zwischenelement (12) aufschraubbar ist.

5. Viehbetäubungsvorrichtung (44) nach einem der vorstehenden Ansprüche, **dadurch gekennzeichnet, dass** das Zwischenstück (12) über ein Gewinde mit einem auf das Zwischenstück (12) aufschraubbaren Kopfstück (16) verbunden ist, **dadurch gekennzeichnet, dass** das Gewinde mehrgängig und/oder als modifiziertes Trapezgewinde (96) mit abgerundeten Flanken ausgebildet ist.

6. Viehbetäubungsvorrichtung (44) nach einem der vorstehenden Ansprüche, **dadurch gekennzeichnet, dass** der Auslösehebel (24) mindestens im Bereich des freien beweglichen Endes vollständig mit Kunststoff umspritzt ist und/oder das Gehäuse (14) zumindest teilweise in einem den Schussbolzen (20) umschließenden Bereich von einer zusätzlichen Mantelhülse (102) derart umschlossen ist, dass mindestens ein zusätzlicher Gasausstoßpfad gebildet ist.

7. Viehbetäubungsvorrichtung (44) nach einem der vorstehenden Ansprüche, **dadurch gekennzeichnet, dass** zusätzlich zu dem Zwischenstück (12) ein alternatives Zwischenstück vorgesehen ist, wobei in einem der Zwischenstücke (12) ein zentral angeordnetes Patronenlager (108) für eine Zentralfeuerpatrone und in dem anderen Zwischenstück ein dezentral angeordnetes Patronenlager für eine Randzünderpatrone vorgesehen ist.

8. Viehbetäubungsvorrichtung (44) nach einem der vorstehenden Ansprüche, **dadurch gekennzeichnet, dass** das Patronen-Auswerfelement (80) und/oder das Zwischenstück (12) derart ausgebildet sind, dass das Patronen-Auswerfelement (80) zumindest während der axialen Verschiebung verdrehgesichert ist.

9. Viehbetäubungsvorrichtung (44) nach dem vorstehenden Anspruch, **dadurch gekennzeichnet, dass** an dem Patronen-Auswerfelement (80) und an dem Zwischenstück (12) mindestens ein radial hervorragender Vorsprung (118) und eine korrespondierende Vertiefung (116) ausgebildet sind.

10. Viehbetäubungsvorrichtung (44) nach einem der vorstehenden Ansprüche, **dadurch gekennzeichnet, dass** das Patronen-Auswerfelement (80) und das Zwischenstück (12) aus dem gleichen Werkstoff hergestellt sind.

11. Viehbetäubungsvorrichtung (44) nach dem vorstehenden Anspruch, **dadurch gekennzeichnet, dass** das Patronen-Auswerfelement (80) und das Zwischenstück (12) aus einem Vergütungsstahl hergestellt sind.
